# EUROPEAN PATENT APPLICATION

(11) **EP 1 568 408 A2**
(43) Date of publication of application: **31.08.2005**
(21) Application number: 05250826.4
(22) Date of filing: 14.02.2005
(51) Int. Cl.: B01D 61/44, C02F 1/469, A23C 9/144, A23L 2/74

(54) **Electrodialyzed compositions and method of treating aqueous solutions using electrodialysis**

(30) Priority: 23.02.2004 US 784404
(71) Applicant: KRAFT FOODS HOLDINGS, INC., Illinois 60093 (US)
(72) Inventor: Crowley, Colin P., Wheeling, Illinois 60090 (US); Loh, Jimbay P., Green Oaks, Illinois 60048 (US)
(74) Representative: W.P. Thompson & Co.

(57) **Abstract**

An electrodialysis system is used to produce electrodialyzed compositions with altered pH but without objectionable odor and taste. An aqueous solution is contacted with a membrane electrodialysis system and an electrical potential is applied in an amount effective for changing the pH of the aqueous solution by at least about 2.0 and for providing an electrodialyzed composition having a total cation or anion concentration of about 1.0N or less, and individual cation or anion concentration of about 0.6N of less, and a free chlorine content of about 2 ppm or less.

## Description

The present invention is directed to methods for treating aqueous solutions using electrodialysis to provide electrodialyzed compositions. More specifically, an aqueous solution is contacted with a membrane electrodialysis system which is effective for providing an electrodialyzed composition having desirable organoleptic qualities, a raised or lowered pH, and/or reduced anion and/or cation concentrations. The electrodialysis system utilizes combinations of semi-permeable, ion selective membranes under the influence of an applied moderate electrical field to provide an electrodialyzed composition.

### BACKGROUND

Food processing often requires pH adjustments to obtain desired product stabilities and for further processing. The direct addition of acids (such as HCI) and bases (such as NaOH) for pH adjustment in foods, including water, may not be allowed by the current food regulations, at least in certain food applications. The direct addition of food acidulants (such as lactic acid) or bases (such as sodium phosphate) inevitably leads to significant (often negative) alteration in taste in such acidified or basified foods. Subsequent neutralization may result in undesirable precipitates which detract from the organoleptic quality of the food and make additional processing more difficult.

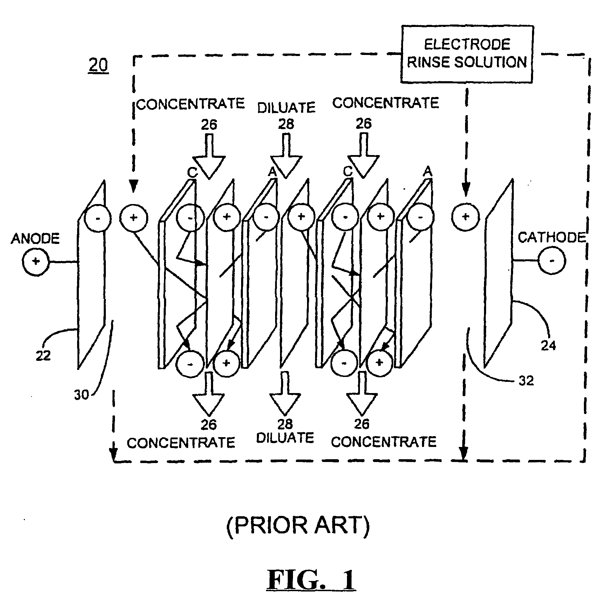

One alternative to adding acids or bases to foods is to use compositions generated by electrolysis and/or electrodialysis. Electrodialysis (ED) is used in connection with the separation of dissolved salts or other impurities from one aqueous solution to another aqueous solution. The separation of these dissolved salts or other impurities results from ion migration through semi-permeable, ion-selective membranes under the influence of an applied direct current field that is established between a cathode (negative potential electrode) and an anode (positive potential electrode). The membranes may be selective for monovalent or multivalent ions depending on whether separation is desired between monovalent or multivalent cations and/or anions. The separation process results in a salt or impurity concentrated stream (known as a concentrate or brine) and in a salt or impurity depleted stream (known as a diluate). The concentrate and diluate streams flow in solution compartments in the electrodialysis apparatus that are disposed between the anode and cathode and that are separated by alternating cation and anion selective membranes. The outer most compartments adjacent the anode and cathode electrodes have a recirculating electrode-rinse solution flowing therethrough to maintain the cathode and anode electrodes clean. A schematic of one type of electrodialysis apparatus is illustrated in FIG. 1.

The electrodialysis apparatus 20 shown in FIG. 1 has a series of alternating cation semi-permeable, ion-selective membranes C and anion semipermeable, ion-selective membranes A disposed between a positive DC potential anode electrode 22 and a negative DC potential cathode electrode 24. The cation-selective membranes C and the anion selective membranes A form compartments therebetween. As indicated in FIG. 1, concentrate and diluate solutions flow as indicated respectively by arrows 26 and 28 through adjacent compartments such that the concentrate and diluate solutions are separated from each other by the ion-selective membranes. The diluate solutions may contain salts (such as sodium chloride (NaCl)) or impurities (such as sodium chloride (NaCl) in acidic magnesium chloride (MgCl₂) solutions or calcium chloride (CaCl₂) and magnesium chloride (MgCl₂) in sodium chloride (NaCl) and potassium chloride (KCl) solutions). Due to the potential maintained across each of the compartments and cation and anion selective membranes separating the compartments, cations (such as hydrogen ion (H⁺), sodium (Na⁺), magnesium (Mg⁺²), calcium (Ca⁺²) and potassium (K⁺)) and anions (such as chloride (Cl⁻)) as well as water (hydration shell and osmosis) will tend to migrate from the diluate solution to the concentrate solution. Once these cations and anions are in the concentrate solution, they can be recovered and used for commercial purposes. Additionally, the purified or salt-depleted diluate solution also may have an increased commercial value.

Impact (e.g. flavor) due to potential electrochemical reactions at electrodes are minimized with rinse solution segregated from process stream by a selective membrane. As further indicated in the schematic of FIG. 1, an electrode rinse solution is circulated in an outer most compartment 30 adjacent to the anode 22 and an outer most compartment 32 adjacent to the cathode 24. An aqueous solution in contact with a cathode will generate hydrogen gas. Similarly, an aqueous solution in contact with an anode will generate oxygen gas. As a result, the pH level in the electrode rinse solution circulating through the compartment 32 increases while the pH level of the electrode rinse solution circulating through the compartment 30 decreases. Since the electrode rinse solutions are mixed after flowing through the compartments 30 and 32, the increase and decrease in the pH level of the electrode rinse solution used in the electrodialysis apparatus 20 tends to be neutralized. In all cases the hydrogen and oxygen gases are kept segregated in the electrode rinse because of the presence of the membranes separating compartments in the electrodialysis unit.

A disadvantage of many of the current ED systems is that they are not able to process appropriate aqueous solutions to provide ED compositions with acceptable pH levels and organoleptic properties. In addition, direct contact of the process stream with electrodes (such as in the case of electrolysis) results in contamination from electrochemical reaction products.

### SUMMARY

The present invention is directed to an electrodialysis (ED) method for producing an electrodialyzed composition with altered pH, but without objectionable odor and taste. In most cases, the electrodialyzed composition is suitable for direct consumption by humans (except for the extreme pHs such as less than 2.0) or can be used in food products as a food ingredient. The ED method uses an apparatus that includes semi-permeable, ion-selective membranes under the influence of an applied moderate electrical field that is established between a cathode (negative potential electrode) and an anode (positive potential electrode). The membranes and electrical fields are effective for separating dissolved ions from an aqueous feed solution without degrading the organoleptic quality of the resulting electrodialyzed composition.

The ED method is effective for raising and lowering the pH of an aqueous solution and does not require the addition of base or acid for pH adjustment. Since acids and bases are not added, undesirable precipitates and salts are not formed; thus, there is no need to remove precipitates or salts from the resulting products. Moreover, undesirable flavors and tastes are not introduced into the electrodialyzed composition by the addition of acid or base. Thus, the resulting electrodialyzed composition is suitable for many food related uses including, but not limited to, direct consumption and use in processed foods.

The types of aqueous solutions that are treated, the design of the ED apparatus and its operating parameters are effective for providing an electrodialyzed composition which is moderately acidic or basic but which does not include or is substantially free of undesirable compounds, such as for example, free chlorine, hypochlorous acid, chlorate, and/or ozone. The ED method includes contacting an aqueous solution having a total anion or cation concentration of less than about 1.8N with a membrane electrodialysis system. The membrane system includes a bipolar membrane situated in between a plurality of cationic or anionic membranes. When the pH of the aqueous solution is to be increased, the bipolar membrane is preferably placed between anionic membranes; and when the pH of the aqueous solution is to be decreased, the bipolar membrane is preferably placed between cationic membranes. Membranes are disposed between a cathode electrode and an anode electrode.

Aqueous solutions which may be treated by membrane electrodialysis include aqueous solutions having a total anion or cation concentration of about 1.8N or less, preferably about 1.0N or less. The aqueous solution being treated should be substantially free from microorganisms and harmful impurities.

In one aspect of the invention, an electrical potential is applied across the anode and cathode for a time effective for providing an electrodialyzed solution having a reduced pH and having a total cation concentration of about 1.0N or less, preferably about 0.5N or less, most preferably about 0.1N or less, a total cation concentration of about 0.5N or less, preferably about 0.3N or less, individual cation concentration of about 0.6N or less, preferably about 0.3N or less, most preferably about 0.04N or less, and an available or free chlorine content of about 2 ppm or less, preferably about 1.0 ppm or less. The electrodialyzed composition has a pH of 5.0 or less, preferably a pH of about 1 to about 5.

In another aspect of the invention, an electrical potential is applied across the anode and cathode for a time effective for providing an electrodialyzed solution having an increased pH and a total anion concentration of about 1.0N or less, preferably about 0.5N or less, most preferably about 0.1N or less, an individual anion concentration of about 0.6N or less, preferably about 0.3N or less, most preferably about 0.04N or less, and a free chlorine content of about 2 ppm or less, preferably about 1.0 ppm or less. The electrodialyzed composition has a pH of about 8.0 or greater, preferably a pH of about 9 to about 13.

In another aspect, an electrodialysis composition suitable for human consumption is prepared by a method that includes contacting an aqueous solution having a total anion or total cation concentration of about 1.8N or less with a membrane electrodialysis system. The membrane electrodialysis system includes at least one bipolar membrane in between a plurality of cationic membranes or a plurality of anionic membranes. All of the membranes are disposed between a cathode electrode and an anode electrode. An electrical potential is applied across the anode and cathode for a time effective for providing an electrodialyzed composition having a total anion or total cation concentration of less than 1.0N, an individual cation or anion concentration of less than 0.6N, and a free chlorine content of less than 1 ppm.

### BRIEF DESCRIPTION OF THE DRAWINGS

FIG. 1 is a block diagram of a prior art design of the invention.
FIG. 2 is one example of a membrane electrodialysis system for decreasing pH.
FIG. 3 is one example of a membrane electrodialysis system for increasing pH.
FIG. 4 is another example of a membrane electrodialysis system for decreasing pH.

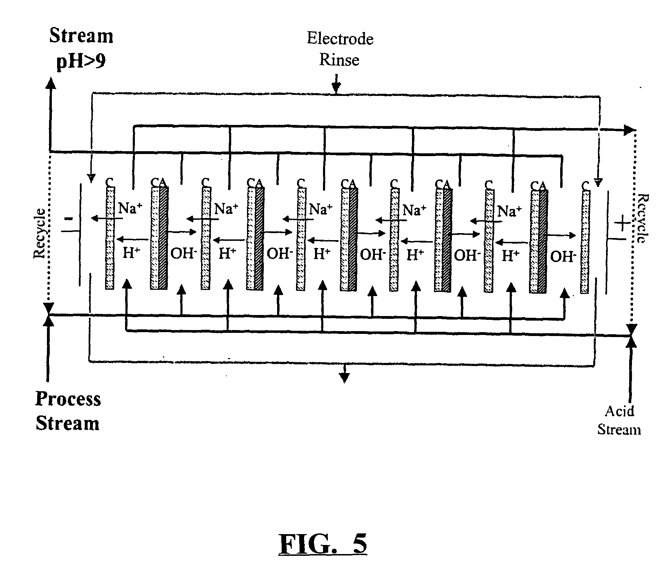

FIG. 5 is another example of a membrane electrodialysis system for increasing pH.

### DETAILED DESCRIPTION

The present ED method is effective for providing ED compositions that are suitable for human consumption. As used herein "suitable for human consumption" means free from harmful or unapproved chemical(s) and objectionable flavor or taste.

The ED method is effective for providing ED compositions wherein the levels of undesirable compounds have been reduced so that they can not be tasted. For example, the ED composition has less than about 2 ppm available or free chlorine, preferably less than about 1 ppm, and undetectable levels of hypochlorous acid, chlorate, and ozone.

**Aqueous Solution**. Aqueous feed solutions which may be treated with the ED method include any mineral or ion rich aqueous solution obtainable from natural water sources such as spring water, well water, municipal water, and/or artificially ion enriched water free from contamination and excessive chlorination (for example greater than about 2 ppm of free chlorine). An aqueous feed solution for ED treatment should have a total cation or total anion concentration of about 0.0001N to about 1.8N which is effective for providing an initial conductivity of about 0.1 to about 200 mS/cm. As used herein, "total cation concentration" or "individual cation concentration" means any cation (such as Na⁺, K⁺, Ca⁺⁺, Mg⁺⁺) concentration excluding hydrogen ion. "Total anion concentration" or "individual anion concentration" means any anion (such as Cl⁻, F⁻, SO₄⁻², PO₄⁻³) concentration excluding hydroxyl ions. Ion concentrations may be determined using techniques known in the art, such as for example inductive coupled plasma atomic emission spectroscopy for selected cations and ion chromatography for selected anions.

In an important aspect, the aqueous feed solution to be treated with ED may have a total cation or total anion concentration of about 0.002N to about 1.0N which is effective for providing an initial conductivity of about 1.0 to about 30 mS/cm. For example, the aqueous solution to be treated with ED may include at least one of the following:

| Cations: | Concentration (N) |
|---|---|
| calcium | 0-0.2 |
| magnesium | 0-0.002 |
| potassium | 0-0.01 |
| sodium | 0-1.7 |

| Anions: | |
|---|---|
| bicarbonate | 0-0.07 |
| chloride | 0-1.7 |
| sulfate | 0-0.01 |
| Other non-toxic, edible ions may also be included. | |

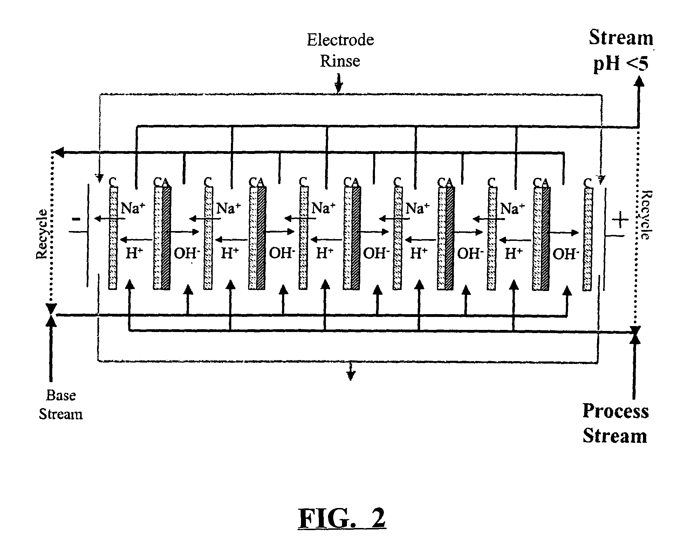

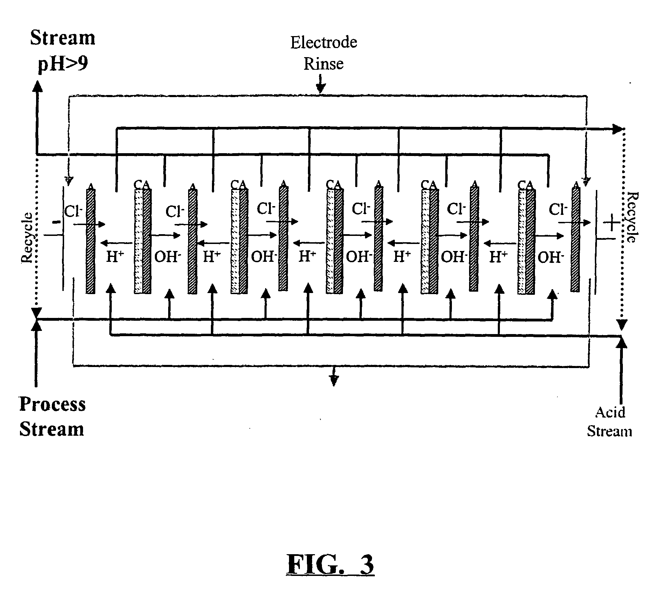

**Membrane Electrodialysis**. As shown in Figures 2 and 3, membrane electrodialysis may be conducted using a bipolar membrane and anionic or cationic membranes. The membranes are disposed between a cathode and anode and subjected to an electrical field. The membranes form separate compartments and materials flowing through those compartments may be collected separately. An example of an electrodialysis apparatus containing ion-selective membranes is EUR6 (available from Eurodia Industrie, Wissous, France). Suitable membranes are available from Tokuyama (Japan). A bipolar membrane includes a cationic membrane and an anionic membrane joined together.

In accordance with one aspect, an aqueous solution is contacted with the ion-selective membranes. Aqueous solutions may be processed in a batch mode, semi-continuous mode, or continuously by flowing an aqueous solution over the ion-selective membranes. When using batch, semi-continuous mode, or continuous processing, an electrical potential is applied across the anode and cathode for a time effective for providing an electrodialyzed solution with the desired pH and ion concentrations. Processing times in a batch mode and flow rates in a semi-continuous mode or continuous mode are a function of the number of ion-selective membranes that are used and the amount of electrical potential applied. Hence, resulting ED solutions can be monitored and further processed until a desired pH and ion concentration is achieved. Generally, an electrical potential of about 0.1 to about 10 volts per cell is provided across the anode and cathode electrode.

As shown in Figure 2, the pH of the aqueous solution may be adjusted to a pH range of about 0 to about 7 by contacting the aqueous solution with at least one, preferably a plurality of bipolar membranes that includes cationic membranes on both sides of the bipolar membrane. Materials from the compartments to the left of the bipolar membranes are collected for subsequent use. Materials collected from the compartments to the right of the bipolar membranes may be recirculated back through the membranes or circulated to a second membrane electrodialysis as many times as needed to provide an aqueous solution having a pH of about 0 to about 7, preferably, about 1 to about 5. Materials from the compartments to the left of the bipolar membranes may also be recirculated back through the membranes. Materials from the compartments adjacent to the anode and cathode may be recirculated back through the membranes.

As shown in Figure 3, the pH of the aqueous solution may be adjusted to a pH range of about 8 to about 14 by contacting the aqueous solution with at least one, preferably a plurality of bipolar membranes that include anionic membranes on both sides of the bipolar membrane. Materials from the compartments to the right of the bipolar membranes are collected for subsequent use. Materials collected from the compartments to the left of the bipolar membranes may be recirculated back through the membranes or circulated to a second membrane electrodialysis as many times as are need to provide an aqueous solution having a pH of about 8 to about 14, preferably about 9 to about 12. Materials from the compartments to the right of the bipolar membranes may be recirculated back through the membranes. Materials from the compartments adjacent to the anode and cathode may be recirculated back through the membranes.

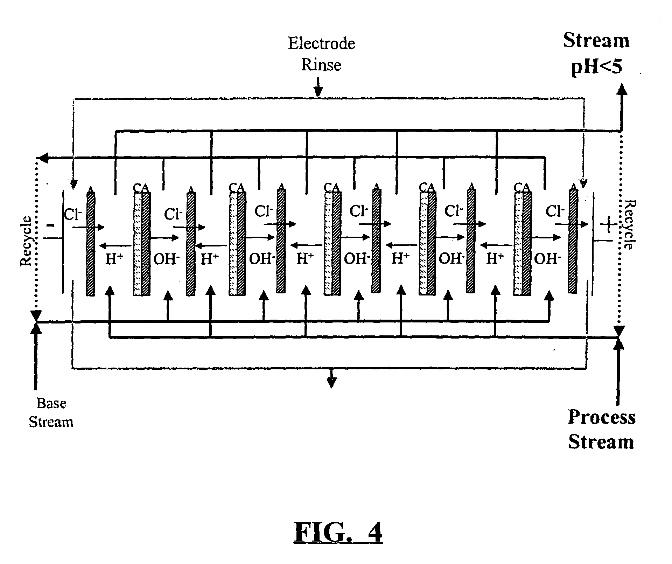

In addition to the membrane configurations shown in Figures 2 and 3, the membranes may also be configured as further illustrated in Figures 3 and 4.

**Electrodialyzed Composition**. After treatment with membrane electrodialysis, the pH altered electrodialyzed composition has a total cation or anion concentration of less than about 1.0N, concentration of any individual ion of less than about 0.6N and a free chlorine content of less than 2 ppm. In a preferred embodiment, the electrodialyzed composition has a total cation concentration or anion concentration of less than about 0.5N, individual cation or anion concentration of less than 0.3N and a free chlorine content of less than 1 ppm. For example, the electrodialyzed composition may contain the at least of the following. Other non-toxic, edible ions may also present limited mainly by the taste impact of the individual ions.

| Concentration (N) | |
|---|---|
| **Cations:** | |
| calcium | 0-0.1 |
| magnesium | 0-0.001 |
| potassium | 0-0.005 |
| sodium | 0-0.9 |

| **Anions:** | |
|---|---|
| bicarbonate | 0-0.04 |
| chloride | 0-0.9 |
| sulfate | 0-0.005 |

After treatment with membrane electrodialysis, electrodialyzed compositions will have a pH ranging from about 0 to about 14; for acidic post-ED compositions, preferably from about 1 to about 5, and for basic post-ED composition, preferably from about 9 to about 12. Treated solutions have a free chlorine content of less than 1 ppm and do not have objectionable tastes and/or odors.

The following examples illustrate methods for carrying out the invention and should be understood to be illustrative of, but not limiting upon, the scope of the invention which is defined in the appended claims.

### EXAMPLES

### EXAMPLE 1

An acidic aqueous ED composition was prepared by using ED equipped with a cation monopolar-bipolar-cation monopolar membrane configuration as described in Figure 2. 8 L of Pre-ED solution (described below) was processed using 6.1 V/cell with 1000 A/m² electrical potential for 67 minutes until pH 1.7 was achieved. Ion profiles of the feed (pre-ED) aqueous solution and the treated (post-ED) aqueous solution are given in the table below.

| | Ion Concentration (mN) | |
|---|---|---|
| | Pre-ED | Post-ED |
| Calcium | 11.97 | 0.50 |
| Magnesium | 0.30 | < 0.01 |
| Potassium | 6.93 | 2.42 |
| Sodium | 17.75 | 0.47 |
| Chloride | 17.54 | 17.54 |
| Sulfate | 9.37 | 9.37 |
| Total cations | 36.95 | 3.39 |
| The Pre-ED water had a pH of 7.79 and the Post-ED water had a pH of 1.67. The treated, acidic aqueous solution has no objectionable odor. When diluted with deionized water to pH of 3.25, the resulting mixture is practically tasteless. | | |

### EXAMPLE 2

A basic ED composition was prepared by using ED equipped with a anion monopolar-bipolar-anion monopolar membrane configuration as described in Figure 3. 8 L of solution was processed using 6.0 V/cell with 250 A/m² electrical potential for 150 minutes until pH 10.9 was achieved. Ion profiles of the feed (pre-ED) aqueous solution and the treated (post-ED) aqueous solution are given in the table below.

| | Ion Concentration (mN) | |
|---|---|---|
| | Pre-ED | Post-ED |
| Calcium | 11.60 | 11.60 |
| Magnesium | 4.77 | 4.77 |
| Potassium | 0.05 | 0.05 |
| Sodium | 1.91 | 1.91 |
| Chloride | 1.86 | 1.78 |
| Sulfate | 11.24 | 11.24 |
| Total Anions | **16.76** | **16.68** |
| The Pre-ED water has a pH of 5.37 and the Post-ED water has a pH of 10.90. The treated, basic aqueous solution has no objectionable odor. | | |

### EXAMPLE 3

An acidic ED composition was prepared by using ED equipped with a cation monopolar-bipolar-cation monopolar membrane configuration as described in Figure 2. 8 L of solution was processed using 6.1 V/cell with 1000 A/m² electrical potential for 90 minutes until pH 1.1 was achieved. Ion profiles of the feed (pre-ED) aqueous solution and the treated (post-ED) aqueous solution are given in the table below.

| | Ion Concentration (mN) | |
|---|---|---|
| | Pre-ED | Post-ED |
| Calcium | 1.92 | 0.02 |
| Magnesium | 0.95 | 0.02 |
| Potassium | 0.05 | 0.01 |
| Sodium | 114 | 37.3 |
| Chloride | 114 | 114 |
| Sulfate | 1.21 | 1.21 |
| Total Cations | 307 | 37.35 |
| The Pre-ED water has a pH of 7.88 and the Post-ED water has a pH of 1.1. | | |
| The treated, acidic aqueous solution has no objectionable odor and is nearly tasteless. | | |

## Claims

1. An electrodialysis method comprising:
contacting an aqueous solution having a total anion or total cation concentration of 1.8N or less with a membrane electrodialysis system, the membrane electrodialysis system comprising at least one bipolar membrane in between a plurality of cationic membranes or a plurality of anionic membranes, a cathode electrode, and an anode electrode when all of the membranes are disposed between the cathode electrode and the anode electrode;
applying an electrical potential across the anode electrode and cathode electrode for a time effective for changing the pH of the aqueous solution by at least 2.0 and providing an electrodialyzed composition having a total anion or total cation concentration of 1.ON or less, individual cation or anion concentrations of 0.6N or less, and a free chlorine content of 2 ppm or less.

2. The method of Claim 1 wherein the membrane electrodialysis system includes a bipolar membrane in between two cationic membranes.

3. The method of Claim 1 or 2 wherein the electrodialyzed composition has total cation concentration of 0.5 N or less, individual cation concentration of 0.3N or less, a free chlorine content of 2 ppm or less and a pH of 5.0 or less.

4. The method of any one of Claims I to 3 wherein the electrodialyzed composition has total cation concentration of less than 0.1N and individual cation concentration of less than 0.04N.

5. The method of Claim 1 wherein the membrane electrodialysis system includes a bipolar membrane in between two anionic membranes.

6. The method of any one of Claims 1 to 5 wherein the electrodialyzed composition has total anion concentration of 0.5N or less, individual anion concentration of 0.3N or less, a free chlorine content of 2 ppm or less and a pH of 8.0 or greater.

7. The method of any one of Claims 1 to 6 wherein the electrodialyzed composition has total anion concentration of 0.1N or less and individual anion concentrations of 0.04N or less.

8. The method of any one of Claims 1 to 7 wherein an electrical potential of 0.1 to 10 volts per cell is provided across the anode electrode and cathode electrode.

9. An electrodialyzed composition suitable for human consumption, the composition comprising a total cation concentration of 1.0N or less, individual cation concentration of 0.6N or less, a free chlorine content of 1 ppm or less, and a pH of 5.0 or less.

10. The electrodialyzed composition of Claim 9 wherein the total cation concentration of 0.5N or less, individual cation concentration of 0.3N or less, a free chlorine content of 1 ppm or less, and a pH of 5.0 or less.

11. The electrodialyzed composition of Claim 9 or 10 wherein the total cation concentration is 0.1N or less and the individual cation concentrations are less 0.04N or less, and the free chlorine content is 1ppm or less.

12. An electrodialyzed composition suitable for human consumption, the composition comprising a total anion concentration of 1.0N or less, individual anion concentrations are 0.6N or less, a free chlorine content of 1 ppm or less, and a pH of 8.0 or greater.

13. The electrodialyzed composition of Claim 12 wherein the total anion concentration is 0.5N or less, individual anion concentrations are 0.3N or less, and the free chlorine content is 1 ppm or less.

14. The electrodialyzed composition of Claim 12 or 13 wherein the total anion concentration is 0.1N or less and individual anion concentrations are 0.04N or less.

15. An electrodialyzed composition suitable for human consumption prepared by a method comprising:
contacting an aqueous solution having a total anion or total cation concentration of 1.8 N or less with a membrane electrodialysis system, the membrane electrodialysis system including at least one bipolar membrane in between a plurality of cationic membranes or a plurality of anionic membranes, all of the membranes being disposed between a cathode electrode and an anode electrode;
applying an electrical potential across the anode and cathode for a time effective for changing the pH of the aqueous solution by at least 2.0 and providing an electrodialyzed composition having a total anion or total cation concentration of 1.0N or less, individual cation or anion concentration of 0.6N or less, and a free chlorine content of 1 ppm or less.

16. The composition of Claim 15 wherein the membrane electrodialysis system includes a bipolar membrane in between two cationic membranes.

17. The composition of Claim 15 or 16 wherein an electrical potential is applied across the anode and cathode for a time effective for providing an electrodialyzed composition having a total cation concentration of 0.5N or less, and individual cation concentration of 0.3N or less.

18. The composition of any one of Claims 15 to 17 wherein the electrodialyzed composition has a total cation concentration of 0.1N or less and individual cation concentration of 0.04N or less.

19. The composition of Claim 15 wherein the membrane electrodialysis system includes a bipolar membrane in between two anionic membranes.

20. The composition of Claim 19 wherein an electrical potential is applied across the anode and cathode for a time effective for providing an electrodialyzed solution having a total anion concentration of 0.5N or less, an individual anion concentration of 0.3N or less, a free chlorine content of 1 ppm or less and a pH of 8.0 or greater.

21. The composition of any one of Claims 15 to 20 wherein the electrodialyzed composition has a total anion concentration of 0.1N or less and individual anion concentration of 0.04N or less.

22. The composition of any one of Claims 15 to 21 wherein an electrical potential of 0.1 to 10 volts per cell is provided across the anode and cathode electrode.
